# DEMANDE DE BREVET EUROPEEN

(11) **EP 3 771 868 A1**
(43) Date de publication de la demande: **03.02.2021**
(21) Numéro de dépôt: 20187898.0
(22) Date de dépôt: 27.07.2020
(51) Int. Cl.: F24S 80/30, F24S 10/50, F24S 20/66, F24S 25/61, F24S 25/632

(54) **ÉCHANGEUR THERMIQUE À PAROIS MINCES ÉQUIPÉ D'AU MOINS UN SYSTÈME DE RACCORDEMENT AUTOMATIQUE**

(30) Priorité: 29.07.2019 FR 1908584
(71) Demandeur: Nobatek Inef4, 64600 Anglet (FR)
(72) Inventeur: BONNAMY, Paul, 33610 CESTAS (FR); RAJI, Saed, 33170 GRADIGNAN (FR)
(74) Mandataire: Fantin, Laurent

(57) **Abrégé**

L'invention a pour objet un échangeur thermique (10) à parois minces présentant une paroi avant (12), une paroi arrière (14) délimitant entre elles une cavité de fluide (16) de faible épaisseur pour un fluide caloporteur ainsi qu'au moins des premier et deuxième embouts (74, 76) de systèmes de connexion fluidique (18, 20) espacés selon une direction de diffusion, caractérisé en ce que l'échangeur thermique (10) comprend un système de fixation configuré pour permettre de relier l'échangeur thermique (10) à un support (22) grâce à un mouvement de fixation orienté selon une direction de fixation et en ce qu'au moins un des systèmes de connexion fluidique (18, 20) comprend un premier embout (74) mâle et un deuxième embout (76) femelle et est configuré de sorte que le premier embout (74) mâle pénètre dans le deuxième embout (76) femelle lors d'un mouvement de connexion (78) parallèle au mouvement de fixation.

## Description

La présente demande se rapporte à un échangeur thermique à parois minces équipé d'au moins un système de raccordement automatique.

Selon un mode de réalisation décrit dans le document GB2129925, un échangeur thermique comprend deux plaques minces métalliques rectangulaires reliées en périphérie par un cordon de colle et en partie centrale par des bandes de colle délimitant des canaux. Chaque plaque comprend au niveau d'un de ses côtés deux empreintes demi-cylindriques formant lorsque les deux plaques sont assemblées deux conduits cylindriques pour connecter une arrivée d'eau et une sortie d'eau.

Ce mode de réalisation n'est pas pleinement satisfaisant si plusieurs échangeurs thermiques sont utilisés pour former un parement sur un mur. En effet, les systèmes de raccordement prévus sur les côtés ne permettent pas de juxtaposer les échangeurs thermiques les uns à côté des autres. Selon une autre problématique, les différents systèmes de raccordement doivent être connectés un à un par un opérateur. Cette tâche peut s'avérer longue et fastidieuse.

Le document FR2486635 décrit un capteur solaire à air comportant des modules rapportés sur une façade, positionnés les à côté des autres selon une direction horizontale. La fixation des échangeurs sur la façade est réalisée séparément du raccordement fluidique des échangeurs.

Le document US4194497 décrit un capteur solaire comportant plusieurs échangeurs 20 posés sur le toit entre des rails. Les différents échangeurs comprennent un embout mâle positionné en partie supérieure et un embout femelle en partie inférieure pour relier les échangeurs entre eux ou avec un collecteur haut ou bas. Les échangeurs ne sont pas accrochés aux rails, ils sont justes posés sur le toit. Par conséquent, ils ne sont pas adaptés pour une pose sur une façade verticale. Par ailleurs, les embouts mâle et femelle des systèmes de connexion fluidique ne permettent pas de compenser un éventuel désalignement des échangeurs.

La présente invention vise à remédier à tout ou partie des inconvénients de l'art antérieur.

A cet effet, l'invention a pour objet un échangeur à parois minces présentant une paroi avant, une paroi arrière délimitant entre elles une cavité de fluide de faible épaisseur pour un fluide caloporteur ainsi qu'au moins des premier et deuxième embouts de systèmes de connexion fluidique espacés selon une direction de diffusion.

Selon l'invention, l'échangeur thermique comprend un système de fixation configuré pour permettre de relier l'échangeur thermique à un support grâce à un mouvement de fixation orienté selon une direction de fixation et au moins un des systèmes de connexion fluidique comprend un premier embout mâle et un deuxième embout femelle, ledit système de connexion fluidique étant configuré de sorte que le premier embout mâle pénètre dans le deuxième embout femelle lors d'un mouvement de connexion parallèle au mouvement de fixation.

Selon l'invention, il est possible lors de la fixation d'un échangeur thermique d'obtenir simultanément son raccordement automatique à un autre échangeur thermique.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un échangeur thermique à parois minces qui illustre un mode de réalisation de l'invention,
- La figure 2 est une représentation schématique de zones de jonction d'un échangeur thermique qui illustre un premier mode de réalisation de l'invention,
- La figure 3 est une représentation schématique de zones de jonction d'un échangeur thermique qui illustre un deuxième mode de réalisation de l'invention,
- La figure 4 est une représentation schématique de zones de jonction d'un échangeur thermique qui illustre un troisième mode de réalisation de l'invention,
- La figure 5 est une représentation schématique de zones de jonction d'un échangeur thermique qui illustre un quatrième mode de réalisation de l'invention,
- La figure 6 est une coupe transversale d'une partie d'un échangeur thermique qui illustre un mode de réalisation de l'invention,
- La figure 7 est une coupe longitudinale d'un échangeur thermique qui illustre un mode de réalisation de l'invention,
- La figure 8 est une coupe longitudinale schématique d'un échangeur thermique qui illustre un autre mode de réalisation de l'invention,
- La figure 9 est une vue d'une paroi arrière de l'échangeur thermique visible sur la figure 8,
- La figure 10 est une vue en perspective d'un boîtier de connexion qui illustre un mode de réalisation de l'invention,
- La figure 11 est une coupe longitudinale schématique d'un échangeur thermique qui illustre un autre mode de réalisation de l'invention,
- La figure 12 est une coupe longitudinale d'une partie d'un échangeur thermique qui illustre un mode de réalisation de l'invention,
- La figure 13 est une coupe longitudinale d'une partie d'un échangeur thermique qui illustre un autre mode de réalisation de l'invention,
- La figure 14 est une coupe d'un connecteur femelle qui illustre un premier mode de réalisation de l'invention,
- La figure 15 est une coupe d'un connecteur femelle qui illustre un deuxième mode de réalisation de l'invention,
- La figure 16 est une coupe d'un connecteur mâle qui illustre un premier mode de réalisation de l'invention,
- La figure 17 est une coupe de connecteurs mâle et femelle qui illustre un premier mode de réalisation,
- La figure 18 est une coupe de connecteurs mâle et femelle qui illustre un deuxième mode de réalisation,
- La figure 19 est une coupe d'un connecteur mâle qui illustre un troisième mode de réalisation,
- La figure 20 est une coupe de connecteurs mâle et femelle qui illustre le troisième mode de réalisation,
- La figure 21 est une coupe longitudinale des parties inférieure et supérieure de deux échangeurs thermiques reliés par au moins un système de connexion fluidique illustrant un mode de réalisation de l'invention,
- La figure 22 est une vue en perspective depuis l'arrière de deux échangeurs thermiques illustrant un autre mode de réalisation de l'invention,
- La figure 23 est une vue latérale d'un système de connexion fluidique entre les deux échangeurs thermiques visibles sur la figure 22,
- La figure 24 est une vue latérale d'une première partie du système de connexion fluidique visible sur la figure 23,
- La figure 25 est une coupe de la première partie du système de connexion fluidique visible sur la figure 24,
- La figure 26 est une vue latérale d'une deuxième partie du système de connexion fluidique visible sur la figure 23,
- La figure 27 est une coupe de la deuxième partie du système de connexion fluidique visible sur la figure 26,
- La figure 28 est une vue en perspective d'un raccord illustrant un mode de réalisation de l'invention,
- La figure 29 est une première coupe du raccord visible sur la figure 28,
- La figure 30 est une deuxième coupe du raccord visible sur la figure 28.

Sur les différentes figures, on a représenté un échangeur thermique 10 à parois minces présentant une paroi avant 12, une paroi arrière 14 délimitant entre elles une cavité de fluide 16 de faible épaisseur pour un fluide caloporteur ainsi qu'au moins deux embouts de systèmes de connexion fluidique 18, 20, espacées selon une direction de diffusion, permettant d'obtenir un écoulement d'un fluide entre le réseau de fluide 16 et l'extérieur ou une autre cavité de fluide 16', notamment celle d'un autre échangeur thermique 10'.

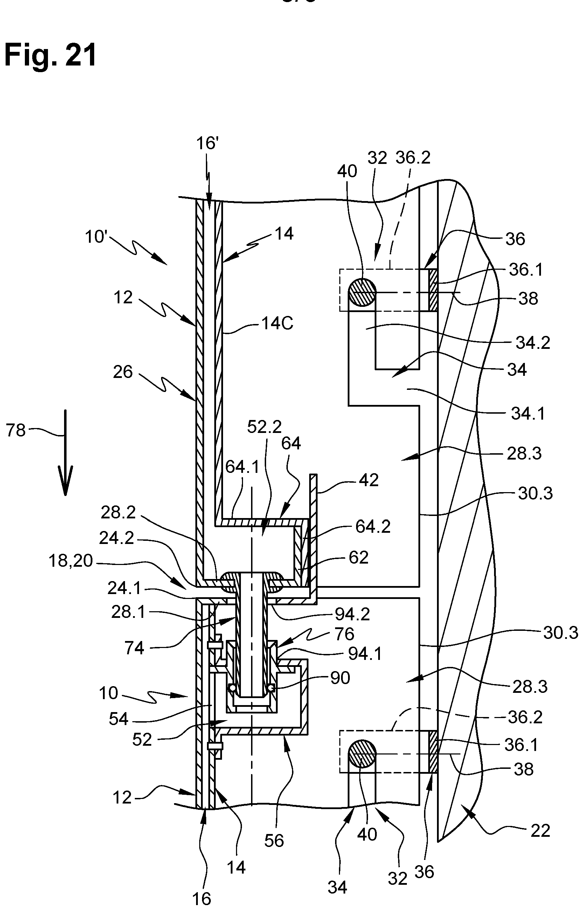

Selon une configuration, la paroi avant 12 est exposée à une source de chaleur, comme par exemple le soleil, et la paroi arrière 14 est orientée vers un support 22 (visible sur la figure 21), comme un mur par exemple.

Les parois avant et arrière 12, 14 sont métalliques et ont des épaisseurs E12, E14 inférieures à 4 mm, de préférence supérieures à 1 mm. Les parois avant et arrière 12, 14 sont espacées d'une distance H inférieure à 4 mm, de préférence supérieure à 1 mm.

Selon un mode de réalisation, les parois avant et arrière 12 et 14 ont chacune une épaisseur E12, E14, de l'ordre de 2 mm, et sont espacées d'une distance H de l'ordre de 2 mm.

Pour donner un ordre de grandeur, la paroi avant 12 est sensiblement rectangulaire ou carrée et présente une première dimension L1, orientée selon la direction de diffusion, correspondant à la hauteur de la paroi avant 12 lorsque l'échangeur thermique 10 est rapporté sur un mur, et une deuxième dimension L2 orientée perpendiculairement à la première dimension L1, chaque première ou deuxième direction L1 et L2 étant comprise entre 300 et 2000 mm.

Pour la suite de la description, on entend par échangeur thermique à parois minces un échangeur thermique qui présente une paroi avant 12 ayant une épaisseur E12 inférieure à 14 mm, une paroi arrière 14 ayant une épaisseur inférieure à 4 mm et une cavité de fluide 16 délimitée par les parois avant et arrière 12, 14 ayant une épaisseur H inférieure à 4mm.

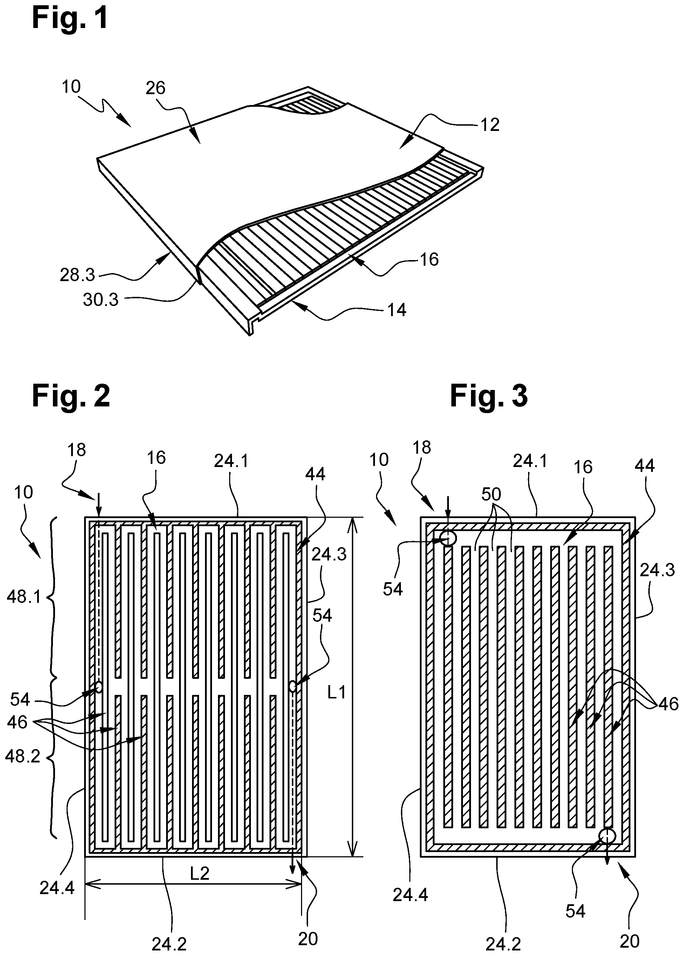

L'échangeur thermique 10 et la paroi avant 12 présentent un bord supérieur 24.1, un bord inférieur 24.2, un bord latéral droit 24.3 et un bord latéral gauche 24.4, référencés notamment sur les figures 2 à 5.

La paroi avant 12 présente une face intérieure 12.1 orientée vers la paroi arrière 14 ainsi qu'une face extérieure 12.2 opposée à la face intérieure 12.1. Selon un mode de réalisation, la face extérieure 12.2 de la paroi avant 12 comprend un revêtement, comme une peinture, favorisant l'absorption de la chaleur.

La paroi arrière 14 présente une face intérieure 14.1 orientée vers la paroi avant 12 ainsi qu'une face extérieure 14.2 opposée à la face intérieure 14.1.

Selon une configuration, la paroi avant 12 comprend une partie frontale plane 26 et, au niveau de chacun des bords supérieur, inférieur, latéraux droit et gauche 24.1 à 24.4, des chants supérieur, inférieur, latéraux droit et gauche 28.1 à 28.4 reliés chacun par une ligne de pliage à la partie frontale 26 et formant avec cette dernière un angle de 90°. En variante, les chants supérieur, inférieur, latéraux droit et gauche 28.1 à 28.4 peuvent formés avec la partie frontale 26 des angles différents de 90°. Chaque chant 28.1 à 28.4 comprend un côté arrière 30.1 à 30.4. Les chants 28.1 à 28.4 peuvent être reliés deux à deux, par une ligne de soudure par exemple ou tout autre moyen, pour former un élément parallélépipédique ouvert au niveau de sa face arrière appelé également cassette.

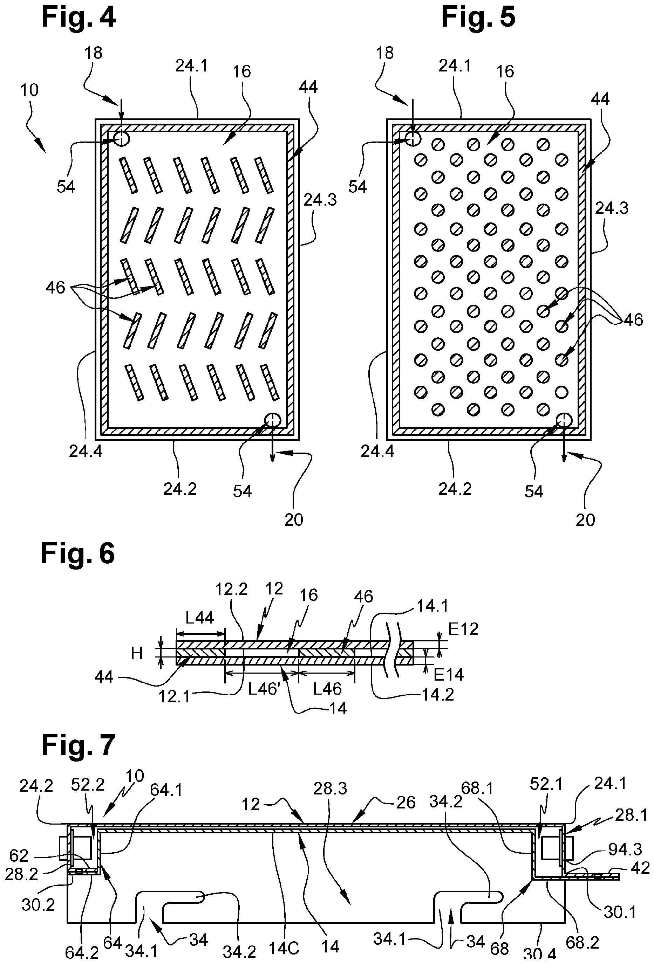

Selon une autre caractéristique, l'échangeur thermique 10 comprend au moins un système de fixation 32 pour le relier à un support 22. Selon un mode de réalisation visible sur les figures 7 et 21, les chants latéraux droit et gauche 28.3, 28.4 comprennent chacun au moins une découpe en L 34 présentant un premier tronçon 34.1 débouchant au niveau du côté arrière 30.3, 30.4 des chants latéraux droit et gauche 28.3, 28.4 et un deuxième tronçon 34.2 espacé du côté arrière 30.3, 30.4, orienté parallèlement à ce dernier et décalé vers le chant supérieur 28.1 par rapport au premier tronçon 34.1.

En complément des découpes en L 34, chaque système de fixation 32 comprend un étrier en U 36 présentant une base 36.1 reliée au support 22 par au moins un élément de fixation 38 et deux ailes 36.2 reliées par une tige 40 configurée pour se loger dans au moins une des découpes en L 34.

Selon une configuration, chaque échangeur thermique 10 comprend au moins deux découpes en L 34, au moins une au niveau de chacun des chants latéraux droit et gauche 28.3, 28.4 et il est relié au support 22 par au moins deux systèmes de fixation 32, au moins un pour chacun des chants latéraux droit et gauche 28.3, 28.4, chaque système de fixation 32 étant commun à deux échangeurs thermiques accolés au niveau de leurs chants latéraux droit et gauche 28.3, 28.4.

Selon ce mode de réalisation, chaque échangeur thermique 10 est fixé au support 22 en positionnant le premier tronçon 34.1 de chaque découpe en L 34 en face d'une tige 40, en décalant horizontalement l'échangeur thermique vers le support 22 de manière à ce que toutes les tiges 40 soient disposées au bas du deuxième tronçon 34.2 de chaque découpe en L 34 puis en translatant l'échangeur thermique 10 verticalement vers le bas de manière à ce que chaque tige 40 se loge proche de l'extrémité supérieure du deuxième tronçon 34.2 de chaque découpe en L 34. Bien entendu, l'invention n'est pas limitée à ce mode de réalisation pour le système de fixation.

Quel que soit le mode de réalisation, chaque système de fixation 32 est configuré pour permettre de relier l'échangeur thermique 10 à un support 22 grâce à un mouvement de fixation, orienté verticalement vers le bas lorsque l'échangeur thermique 10 est fixé sur un mur vertical.

Selon une configuration, le chant supérieur 28.1 a une profondeur P1 sensiblement égale ou inférieure à la profondeur P2 des chants latéraux droit et gauche 28.3, 28.4.

Pour faciliter le positionnement des échangeurs les uns par rapport aux autres, le chant supérieur 28.1 comprend un prolongement 42, parallèle à la partie frontale 26, qui s'étend en saillie vers le haut par rapport au chant supérieur 28.1.

Pour délimiter la cavité de fluide 16, l'échangeur thermique 10 comprend un cordon périphérique 44, reliant les parois avant et arrière 12,14, qui s'étend sur toute la périphérie desdites parois avant et arrière 12, 14 et qui délimite la cavité de fluide 16. Ce cordon périphérique 44 est un cordon de colle ayant une largeur L44 comprise entre 10 et 25 mm.

Selon une configuration, le cordon périphérique 44 décrit un carré ou rectangle et jouxte les bords supérieur, inférieur, latéraux droit et gauche 24.1, 24.2, 24.3, 24.4.

A l'intérieur du cordon périphérique 44, l'échangeur thermique 10 comprend une pluralité de zones de jonction 46 reliant les parois avant et arrière 12, 14. Chaque zone de jonction 46 a une épaisseur égale à la distance séparant les parois avant et arrière 12, 14. Pour éviter un effet de gonflement des parois avant et arrière 12, 14, l'échangeur thermique 10 présente un ratio entre la superficie des zones de jonction 46 et la superficie totale délimitée par le cordon périphérique 44 compris entre 25 et 50%, de préférence de l'ordre de 40%.

Le cordon périphérique 44 et les zones de jonction 46 sont réalisés avec de la colle, notamment des familles des colles structurales méthacrylates ou des colles structurales silicones.

Selon un mode de fonctionnement, le fluide caloporteur présent dans la cavité de fluide 16 a une pression relative inférieure à 3 bars, de l'ordre de 1 bar.

Selon une caractéristique de l'invention, les zones de jonction 46 sont agencées de manière à obtenir une répartition homogène du fluide caloporteur sur toute la superficie de la paroi avant 12.

Selon des premier, deuxième et troisième modes de réalisation visibles sur les figures 2 à 5, chaque zone de jonction 46 se présente sous la forme d'une bande ou d'un plot.

Selon les premier et deuxième modes de réalisation visibles sur les figures 2 et 3, les zones de jonction 46 en forme de bande sont agencées de manière à définir au moins un réseau de canaux en parallèle et/ou en série.

Selon le premier mode de réalisation visible sur la figure 1, les zones de jonction 46 en forme de bande sont agencées de manière à définir deux réseaux de canaux en série 48.1, 48.2.

Selon un deuxième mode de réalisation visible sur la figure 2, les zones de jonction 46 en forme de bande sont agencées de manière à définir un réseau de canaux 50 parallèles.

Selon les premier et deuxième modes de réalisation, les zones de jonction 46 ont une largeur L46 comprise entre 5 et 25 mm, de préférence entre 10 à 15 mm, et sont espacées entre elles ou avec le cordon périphérique 44 d'une distance L46' comprise entre 20 et 40 mm, de préférence de l'ordre de 25 mm.

Selon un troisième mode de réalisation visible sur la figure 4, les zones de jonction 46 en forme de bande sont agencées en chevrons.

Selon un quatrième mode de réalisation visible sur la figure 5, les zones de jonction 46 se présentent sous la forme de plots sensiblement circulaires. Selon un agencement, les zones de jonction 46 en forme de plots sont agencées en quinconce.

Bien entendu, l'invention n'est pas limitée aux modes de réalisation décrits précédemment pour les zones de jonction 46. Ainsi, ces dernières peuvent prendre toutes les formes et être agencées de différentes manières dans la mesure où elles assurent une distribution du fluide caloporteur de manière sensiblement homogène sur quasiment toute la superficie de la cavité de fluide 16. Généralement, la direction de diffusion du liquide caloporteur à l'intérieur de la cavité de fluide 16 est orientée en moyenne parallèlement aux bords latéraux droit et gauche à l'exception du mode de réalisation visible sur la figure 2.

Selon une caractéristique de l'invention, l'échangeur thermique 10 comprend au moins une cavité de distribution 52 communiquant avec la cavité de fluide 16 dans laquelle débouche au moins un embout d'un système de connexion fluidique 18, 20.

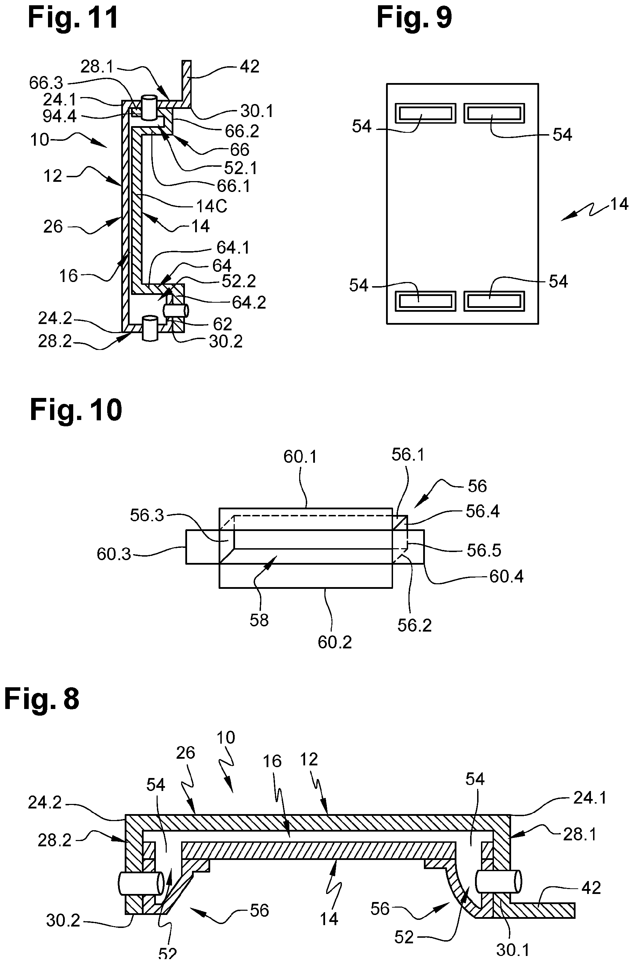

Selon un mode de réalisation visible sur les figures 8, 9, 10, 12 et 21, la paroi arrière 14 comprend, pour chaque cavité de distribution 52, au moins un orifice traversant 54 faisant communiquer ladite cavité de distribution 52 et la cavité de fluide 16. La cavité de distribution 52 est délimitée par un boîtier de connexion 56 plaqué contre la face extérieure 14.2 de la paroi arrière 14 et relié à cette dernière de manière étanche. Selon un mode de réalisation visible sur la figure 10, ce boîtier de connexion 56 comprend cinq parois 56.1 à 56.5 formant un parallélépipède et dégageant une face avant positionnée au niveau de la face extérieure 14.2 de la paroi arrière 14, le boîtier de connexion 56 étant relié à la paroi arrière 14 par tout moyen approprié. Selon une configuration, le boîtier de connexion 56 comprend quatre parois latérales 56.1 à 56.4 présentant des bords avants délimitant une ouverture 58 et des bords arrières reliés à la paroi de fond 56.5, ainsi que quatre rabats 60.1 à 60.4 reliés aux parois latérales 56.1 à 56.4 et formant avec elles un angle de 90°, lesdits rabats 60.1 à 60.4 étant plaqués et reliés à la paroi arrière 14, par exemple par collage, soudage, rivetage et/ou autres.

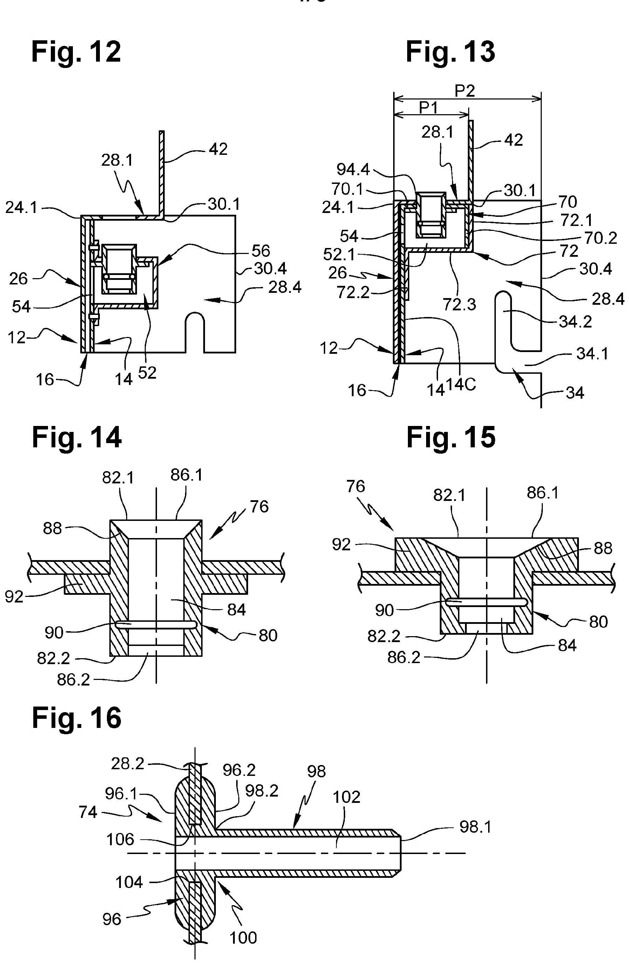

A titre d'exemple, la paroi arrière 14 comprend quatre orifices traversants 54, comme illustré sur la figure 9, chaque orifice traversant 54 étant rectangulaire et ayant une section de passage légèrement inférieure ou identique à celle de l'ouverture 58 du boîtier de connexion 56. L'échangeur thermique 10 peut comprendre au moins une première cavité de distribution 52 au niveau du bord supérieur 24.1 ainsi qu'au moins une deuxième cavité de distribution 52 au niveau du bord inférieur 24.2. Les cavités de distribution 52 peuvent être accolées au bord supérieur ou inférieur 24.1, 24.2, comme illustré sur la figure 8, ou être espacées du bord supérieur ou inférieur 24.1, 24.2, comme illustré sur les figures 12 et 21.

Chaque boîtier 56 peut être séparé ou réalisé d'un seul tenant avec la paroi arrière 14 par emboutissage par exemple.

Selon d'autres modes de réalisation visibles sur les figures 7, 11, 13 et 21, la cavité de distribution 52 est produite par le pliage de la paroi avant 12 et/ou de la paroi arrière 14 et/ou d'une cornière complémentaire.

Selon ces modes de réalisation, une première cavité de distribution 52.1 est positionnée au niveau du bord supérieur 24.1 et une deuxième cavité de distribution 52.2 est positionnée au niveau du bord inférieur 24.2. Les première et deuxième cavités de distribution 52.1, 52.2 s'étendent sur toute la largeur des parois avant et arrière 12, 14 qui sont fermées aux extrémités par des bouchons ou par les chants latéraux droit et gauche 28.3, 28.4.

Selon un mode de réalisation visible sur les figures 7, 11, et 21, pour la deuxième cavité de distribution 52.2, le chant inférieur 28.2 comprend un retour 62 parallèle à la partie frontale 26, le retour 62, le chant inférieur 28.2 et la partie frontale 26 formant une goulotte en U. En complément, la paroi arrière 14 comprend une partie centrale 14C et un rebord inférieur en L 64 qui présente un premier pan 64.1 relié à la partie centrale 14C de la paroi arrière 14 et espacé du chant inférieur 28.2 de la paroi avant 12 ainsi qu'un deuxième pan 64.2 configuré pour être plaqué et fixé de manière étanche au retour 62 de la paroi avant 12 par collage, soudage, rivetage et/ou autres.

Selon un autre mode de réalisation visible sur la figure 11, pour la première cavité de distribution 52.1, la paroi arrière 14 comprend une goulotte en U 66 ouverte vers la paroi avant 12, ladite goulotte en U 66 comprenant une première aile 66.1 reliée à la partie centrale 14C de la paroi arrière 14, une base 66.2 espacée de la partie frontale 26 de la paroi avant 26 et une deuxième aile 66.3 espacée de la première aile 66.1 configurée pour être plaquée et fixée de manière étanche au chant supérieur 28.1 de la paroi avant 12 par collage, soudage, rivetage et/ou autres. La partie centrale 14C, le rebord inférieur en L 64 et la goulotte en U 66 forment une unique pièce obtenue par pliage.

Selon un autre mode de réalisation visible sur la figure 7, pour la première cavité de distribution 52.1, la paroi arrière 14 comprend un rebord supérieur en L 68 présentant un premier pan 68.1 relié à la partie centrale 14C de la paroi arrière 14 et espacé du chant supérieur 28.1 de la paroi avant 12 ainsi qu'un deuxième pan 68.2 configuré pour être plaqué et fixé de manière étanche au prolongement 42 de la paroi avant 12 par collage, soudage, rivetage et/ou autres. La partie centrale 14C, les rebords inférieur et supérieur en L 64, 68 forment une unique pièce obtenue par pliage.

Selon un autre mode de réalisation visible sur la figure 13, pour la première cavité de distribution 52.1, la paroi arrière 14 comprend une goulotte en U 70 présentant un premier pan 70.1 perpendiculaire à la partie centrale 14C, configuré pour être plaqué et fixé de manière étanche au chant supérieur 28.1 de la paroi avant 12 par collage, soudage, rivetage et/ou autres ainsi qu'un deuxième pan 70.2 espacé de la partie centrale 14C, sensiblement parallèle à cette dernière. Pour fermer la première cavité de distribution 52.1, l'échangeur thermique 10 comprend une cornière 72 qui s'étend sur toute la largeur de la paroi arrière 14 et qui présente une première aile 72.1 configurée pour être plaquée et fixée de manière étanche au deuxième pan 70.2 de la goulotte en U 70 par collage, soudage, rivetage, une deuxième aile 72.2 configurée pour être plaquée et fixée de manière étanche à la face extérieure 14.2 de la paroi arrière 14 ainsi qu'une aile intermédiaire 72.3 parallèle au chant supérieur 28.1, reliant les première et deuxième ailes 72.1, 72.2.

L'invention n'est pas limitée à une section carrée et rectangulaire pour la cavité de distribution 52. Comme illustré sur la figure 8, cette cavité de distribution 52 peut avoir une section triangulaire, en quart de rond, ou autres.

Bien entendu, l'invention n'est pas limitée aux modes de réalisation décrits pour les cavités de distribution 52. De préférence, l'échangeur thermique 10 comprend au moins une cavité de distribution 52 qui communique avec la cavité de fluide 16 et au moins un système de connexion fluidique 18, 20, la cavité de distribution 52 s'étendant selon une direction perpendiculaire à la direction de diffusion du fluide caloporteur dans la cavité de fluide 16.

Selon une caractéristique de l'invention, les embouts des systèmes de connexion fluidique 18, 20 sont positionnées au niveau ou à proximité des bords supérieur et inférieur 24.1, 24.2, au moins un premier embout d'un premier système de connexion fluidique 18 étant positionné au niveau ou à proximité du bord supérieur 24.1 et au moins un deuxième embout d'un deuxième système de connexion fluidique 20 étant positionné au niveau ou à proximité du bord inférieur 24.2.

En présence de cavités de distribution 52, si ces dernières sont présentes à proximité des bords supérieur et inférieur 24.1, 24.2, les systèmes de connexion fluidique 18, 20 débouchent directement dans les cavités de distribution 52, si ces dernières sont éloignées des bords supérieur et inférieur 24.1, 24.2, les systèmes de connexion fluidique 18, 20 sont reliés aux cavités de distribution par un conduit.

Selon une autre caractéristique de l'invention, les premier et deuxième systèmes de connexion fluidique 18, 20 sont configurés pour permettre de faire communiquer la cavité de fluide 16 d'un premier échangeur thermique 10 avec la cavité de fluide 16' d'un deuxième échangeur thermique 10' positionné au-dessus ou au-dessous du premier échangeur thermique 10, comme illustré sur la figure 21.

Chaque système de connexion fluidique 18, 20 comprend au moins un premier embout 74 solidaire d'un échangeur thermique 10' et au moins un deuxième embout 76 solidaire d'un échangeur thermique 10, chaque échangeur thermique 10, 10' comprenant un premier embout 74 d'un premier système de connexion fluidique 18 et un deuxième embout 76 d'un deuxième système de connexion fluidique 20.

Selon une première configuration visible sur les figures 16 à 18, au moins un système de connexion fluidique 18, 20 comprend un premier embout 74 mâle et un deuxième embout 76 femelle, au moins un échangeur thermique 10, 10' comprenant au moins un premier embout 74 mâle et au moins un deuxième embout 76 femelle.

Un premier échangeur thermique 10 comprend au moins un deuxième embout 76 femelle configuré pour coopérer avec un premier embout 74 mâle d'un deuxième échangeur thermique 10' positionné au-dessus du premier échangeur thermique 10 ainsi qu'au moins un premier embout 74 mâle configuré pour coopérer avec un deuxième embout 76 femelle d'un troisième échangeur thermique positionné au-dessous du premier échangeur thermique 10.

Chaque système de connexion fluidique 18, 20 est configuré de sorte que le premier embout 74 mâle pénètre dans le deuxième embout 76 femelle lors d'un mouvement de connexion 78 approximativement parallèle à la face frontale 26 de la paroi avant 12, approximativement parallèle aux bords latéraux droit et gauche 24.3, 24.4 et tendant à rapprocher les deux échangeurs thermiques 10, 10'. Lorsque les échangeurs thermiques 10, 10' sont rapportés sur un mur vertical, le mouvement de connexion 78 est vertical et orienté vers le bas, comme le mouvement de fixation de l'échangeur thermique sur un support 22. Le fait que les mouvements de connexion et de fixation soient parallèles permet d'obtenir un raccordement automatique lors de la fixation de l'échangeur thermique 10 sur son support 22.

Selon une configuration, chaque échangeur thermique 10 comprend au moins un premier embout 74 mâle positionné au niveau du bord inférieur 24.2 et au moins un deuxième embout 76 femelle positionné au niveau du bord supérieur 24.1.

Chaque premier ou deuxième embout 74, 76 peut déboucher directement dans une cavité de distribution 52 ou être connecté à une cavité de distribution 52 par un conduit lorsque cette dernière est distante des bords supérieur et inférieur 24.1, 24.2.

Selon des modes de réalisation visibles sur les figures 14, 15, chaque deuxième embout 76 femelle comprend un tube 80 qui s'étend entre des première et deuxième faces terminales 82.1, 82.1 et qui comprend un conduit 84 débouchant au niveau de la première face 82.1 via une première ouverture 86.1 ainsi qu'au niveau de la deuxième face 82.2 via une deuxième ouverture 86.2. Selon une configuration, la première face 82.1 est positionnée à l'extérieur de la cavité de distribution 52 et la deuxième face 82.2 est positionnée à l'intérieur de cette dernière.

Selon une caractéristique de l'invention, le conduit 84 comprend une portée conique 88 au niveau de la première ouverture 86.1 via laquelle pénètre un premier embout 74 permettant de le centrer et de rattraper un désalignement entre les premier et deuxième échangeurs thermiques 10, 10'. Le conduit 84 peut comprendre une réduction de diamètre au niveau de la deuxième ouverture 86.2. Le deuxième embout 76 comprend également un joint torique 90 positionné dans une gorge prévue à l'intérieur du conduit 84.

Pour donner un ordre de grandeur, le conduit 84 a un diamètre intérieur compris entre 8 et 24 mm, de préférence égal à 12 mm. La portée conique 88 présente un angle d'environ 45° et a une hauteur comprise entre 1 et 4 mm, de préférence égale à 2 mm.

Le deuxième embout 76 femelle comprend une collerette 92 pour le fixer sur une paroi qui peut être positionnée au niveau de la première face 82.1, comme illustré sur la figure 13, ou qui peut être écartée de la première face 82.1, comme illustré sur la figure 12.

Selon un mode de réalisation visible sur les figures 12 et 21, lorsque la cavité de distribution 52 est délimitée par un boîtier de connexion 56 distant du chant supérieur 28.1, ledit boîtier de connexion 56 comprend un premier trou de passage 94.1 qui présente un diamètre sensiblement égal au diamètre extérieur du tube 80 de l'embout femelle 76 et le chant supérieur 28.1 présente un deuxième orifice de passage 94.2 qui présente un diamètre sensiblement égal à celui du premier trou de passage 94.1.

Selon un autre mode de réalisation visible sur la figure 7, lorsque la cavité de distribution 52 est délimitée par le chant supérieur 28.1, ce dernier comprend un trou de passage 94.3 qui présente un diamètre sensiblement égal au diamètre extérieur du tube 80 de l'embout femelle 76.

Selon un autre mode de réalisation visible sur les figures 11 et 13, lorsque la cavité de distribution 52 est délimitée par une aile 66.3 ou un pan 70.1 de la paroi arrière 14 plaquée contre le chant supérieur 28.1 de la paroi avant 12, le chant supérieur 28.1 de la paroi avant 12 ainsi que l'aile 66.3 ou le pan 70.1 de la paroi arrière 14 présentent chacun un trou de passage 94.4 ayant un diamètre sensiblement égal au diamètre extérieur du tube 80 du deuxième embout 76.

Bien entendu, l'invention n'est pas limitée aux modes de réalisation décrits ci-dessus pour le deuxième embout 76 femelle.

Le premier embout 74 mâle comprend une tête 96, reliée à au moins une paroi, présentant une première face 96.1 et une deuxième face 96.2, un tube 98, configuré pour pénétrer dans un deuxième embout 76 femelle, présentant une première extrémité 98.1 libre et une deuxième extrémité 98.2 reliée à la deuxième face 96.2 de la tête 96 par une liaison 100 ainsi qu'un conduit 102 qui s'étend entre la première face 96.1 de la tête 96 et la première extrémité 98.1 du tube 98. De préférence, la liaison 100 est une liaison rotule qui permet au tube 98 de s'incliner par rapport à la tête 96 selon toutes les directions d'un angle d'environ 15 à 20°. Selon une configuration, le tube 98 est rigide et la tête 96 est en un matériau déformable comme en élastomère.

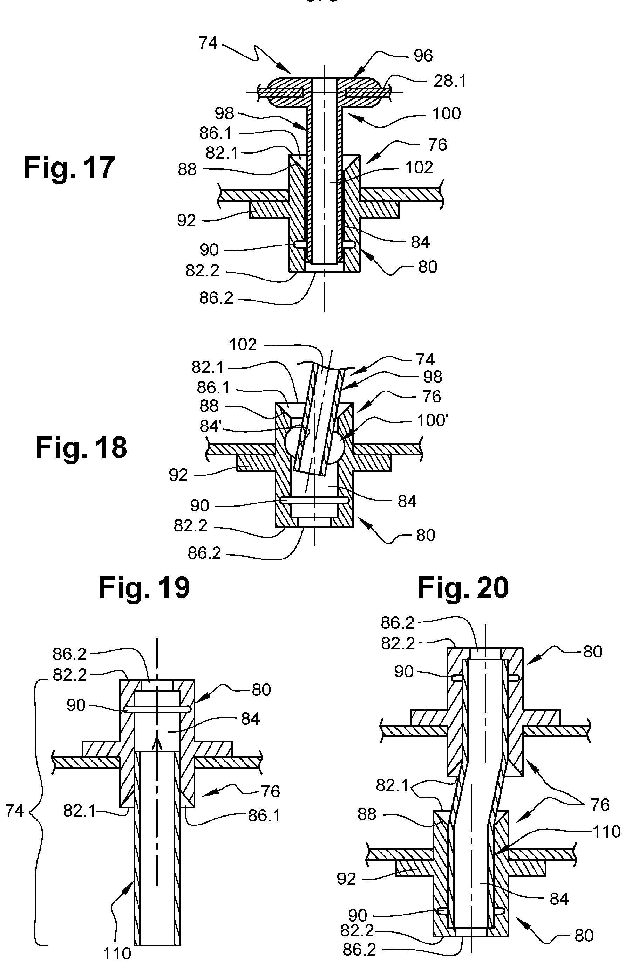

En complément ou en remplacement de la liaison 100, le deuxième embout 76 femelle comprend un conduit 84' intégré dans une sphère d'une rotule 100', comme illustré sur la figure 18. Le fait de prévoir une liaison 100 de type rotule au niveau du premier embout 74 mâle et/ou un conduit 84' intégré dans une sphère d'une rotule 100' au niveau du deuxième embout 76 femelle permet de compenser un éventuel désalignement entre les premier et deuxième embouts 74, 76.

Pour faciliter l'introduction du tube 98 dans un deuxième embout 76 femelle, la première extrémité 98.1 du tube 98 présente un chanfrein pour faciliter la pénétration du tube 98 dans le deuxième embout 76 femelle.

Pour pouvoir le fixer sur une paroi, chaque premier embout 74 mâle comprend une gorge périphérique 104 au niveau de la tête 96, approximativement à équidistance des première et deuxième faces 96.1, 96.2 de la tête 96. En complément, chaque paroi qui délimite la cavité de distribution 52 au niveau de laquelle est raccordé le premier embout 74 mâle, comme par exemple le chant inférieur 28.2, présente un trou de passage 106 dont le diamètre est sensiblement égal à celui du fond de la gorge périphérique 104. Cette dernière présente une largeur sensiblement égale à l'épaisseur de la paroi sur laquelle elle est positionnée. En fonctionnement, la première face 96.1 de la tête 96 du premier embout 74 mâle est positionnée à l'intérieur de la cavité de distribution 52 et le tube 98 est en saillie par rapport au chant inférieur 28.2. La longueur du tube 98 du premier embout 74 mâle est déterminée de manière à ce qu'il soit positionné dans le conduit 84 du deuxième embout 76 femelle, entouré du joint torique 90, lorsque le système de connexion fluidique 18, 20, formé par les premier et deuxième embouts 74, 76, est connecté.

Selon une deuxième configuration visible sur les figures 19 et 20, au moins un système de connexion fluidique 18, 20 comprend un tube 110 et deux embouts 76 solidaires des échangeurs thermiques 10, 10' de type femelle.

Selon cette deuxième configuration, préalablement au raccordement, le tube 110 est inséré dans l'un des embouts 76 femelles de manière à former un embout 74 mâle, le tube 110 correspondant au tube 98 du premier embout 74 mâle décrit sur la figure 16 et l'embout 76 femelle correspondant à la tête 96 du premier embout 74 mâle décrit sur la figure 16. Ainsi, selon la deuxième configuration, le premier embout 74 mâle est composé de deux parties disjointes qui s'emboîtent l'une dans l'autre.

Selon un mode de réalisation, le tube 110 est souple pour compenser un éventuel désalignement, comme illustré sur la figure 20.

Un tel système de connexion fluidique 18, 20 permet un raccordement rapide, sans outil et à l'aveugle, des échangeurs thermiques 10, 10' entre eux.

Ainsi, lorsqu'un premier échangeur thermique 10 est déjà fixé sur le support 22, un deuxième échangeur thermique 10' est positionné au-dessus du premier échangeur, le chant inférieur 28.2 du deuxième échangeur 10' étant distant du chant supérieur 28.1 du premier échangeur 10. Le deuxième échangeur thermique 10' est déplacé horizontalement en direction du support 22 de manière à ce que toutes les tiges 40 soient disposées au bas du deuxième tronçon 34.2 de chaque découpe en L 34. En translatant le deuxième échangeur thermique 10' vers le bas selon le mouvement de connexion 78, le tube 98 de chaque premier embout 74 mâle prévu au niveau du chant inférieur 28.2 du deuxième échangeur thermique 10' pénètre dans le conduit 84 d'un deuxième embout 76 femelle prévu au niveau du chant supérieur 28.1 (ou à proximité de ce dernier) du premier échangeur 10. Ce mouvement de translation permet non seulement de raccorder automatiquement tous les systèmes de connexion fluidique prévus entre les premier et deuxième échangeurs 10, 10' mais également d'obtenir simultanément la fixation du deuxième échangeur 10' sur le support 22.

Selon une application, il est possible d'obtenir un parement d'un mur à partir de plusieurs échangeurs thermiques selon l'invention.

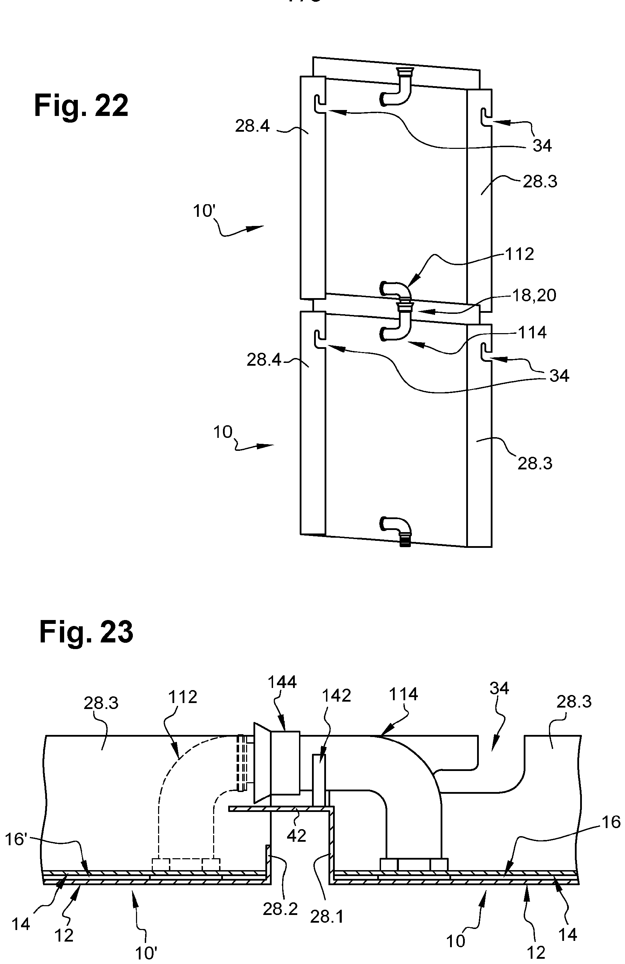

Selon un autre mode de réalisation illustré sur les figures 22 à 30, chaque système de connexion fluidique 18, 20 comprend une première partie 112 dite mâle, reliée à un premier échangeur 10' et une deuxième partie 114 dite femelle, reliée à un deuxième échangeur 10. Comme précédemment, chaque système de connexion fluidique 18, 20 est configuré pour permettre l'emboîtement de la première partie 112 dans la deuxième partie 114 lors de la fixation de l'échangeur supérieur 10' alors que l'échangeur inférieur 10 est déjà fixé.

Pour chacune des première et deuxième parties 112 et 114, la paroi arrière 14 comprend un orifice 116 la traversant et débouchant dans le réseau de fluide 16, 16'.

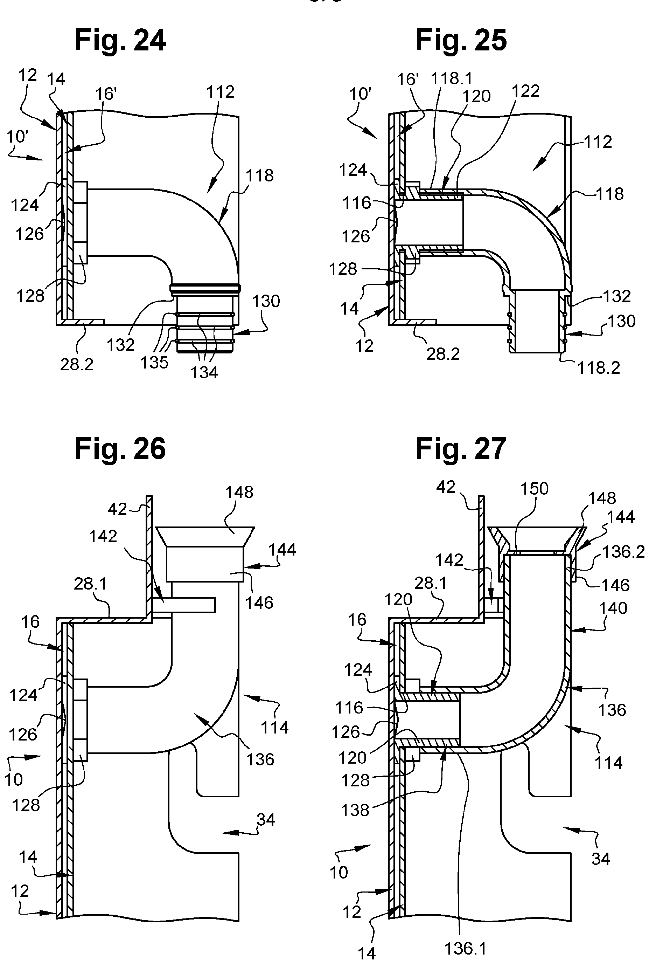

Selon un mode de réalisation visible sur les figures 24 et 25, la première partie 112 comprend un premier tube coudé 118 à 90° ainsi qu'un raccord 120 assurant une liaison entre le premier tube coudé 118 et la paroi arrière 14 pour faire communiquer l'intérieur du premier tube coudé 118 avec le réseau de fluide 16, 16' prévu entre les parois avant et arrière 12, 14 de l'échangeur thermique.

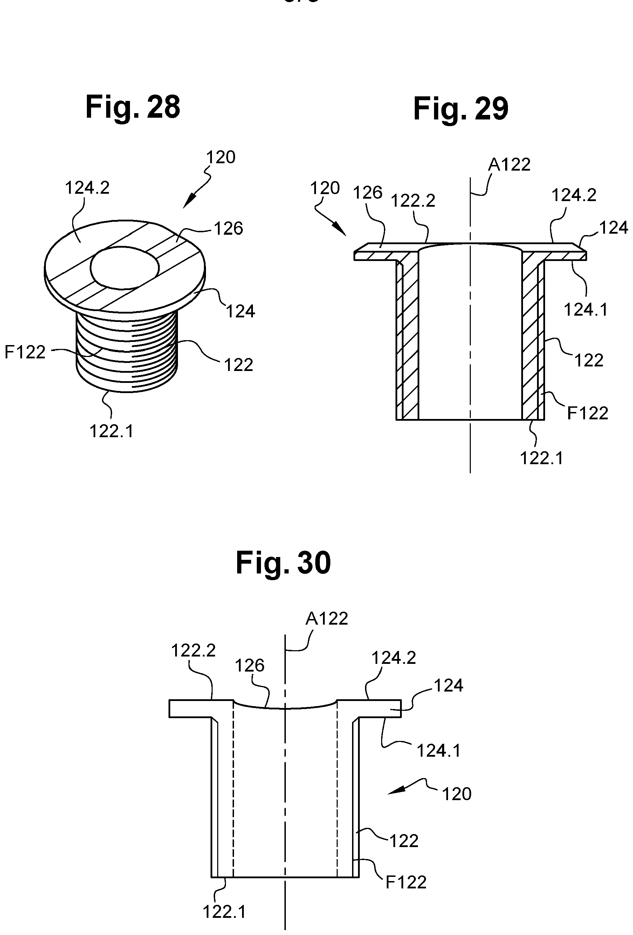

Selon un mode de réalisation visible sur les figures 28 à 30, le raccord 120 comprend un corps tubulaire 122 cylindrique, présentant un axe de révolution A122, qui s'étend entre une première extrémité 122.1 (ayant une face perpendiculaire à l'axe de révolution A122) et une deuxième extrémité 122.2 (ayant une face perpendiculaire à l'axe de révolution A122) ainsi qu'une collerette 124 positionnée au niveau de la deuxième extrémité 122.2. Cette collerette 124 présente des première et deuxième faces 124.1, 124.2 perpendiculaires à l'axe de révolution A122 et orientées respectivement vers la paroi arrière 14 et la paroi avant 12. La collerette 124 a une épaisseur (distance entre les première et deuxième faces 124.1, 124.2) sensiblement égale à la distance séparant les parois avant et arrière 12, 14 de l'échangeur thermique. Pour assurer le passage du fluide entre le réseau de fluide 16, 16' de l'échangeur 10, 10' et l'intérieur du corps tubulaire 122, une rainure 126 est prévue sur la deuxième face 124.2 de la collerette 124 orientée vers la paroi avant 12, ladite rainure 126 reliant au moins un bord périphérique de la collerette 124 et l'intérieur du corps tubulaire 122.

Le corps tubulaire 122 présente un diamètre extérieur inférieur à celui de l'orifice 116 pour pouvoir s'emmancher dans ledit orifice 116 alors que la collerette 124 présente un diamètre supérieur à celui de l'orifice 116.

Le corps tubulaire 122 présente un filetage F122 au niveau de sa face extérieure qui s'étend à partir de sa première extrémité 122.1.

Selon une configuration, un écrou 128 est vissé sur le corps tubulaire 122 jusqu'à ce qu'il soit plaqué contre la paroi arrière 14 pour assurer une liaison entre le raccord 120 et la paroi arrière 14 de l'échangeur thermique. D'autres solutions pourraient être envisagées pour relier le raccord 120 et la paroi arrière 14.

Le premier tube coudé 118 comprend des première et deuxième extrémités 118.1, 118.2, la première extrémité 118.1 étant reliée au corps tubulaire 122 du raccord 120. Selon un mode de réalisation, le premier tube coudé 118 est emmanché et/ou vissé sur le corps tubulaire 122 du raccord 120. D'autres solutions pourraient être envisagées pour relier le raccord 120 et le tube coudé 118.

Le premier tube coudé 118 présente un premier tronçon 130, formant un premier embout, dit mâle, sensiblement rectiligne qui s'étend à partir de la deuxième extrémité 118.2 du tube coudé 118 jusqu'à un épaulement 132. Ce premier tronçon 130 comprend au moins une gorge périphérique 134 configurée pour loger un joint d'étanchéité annulaire 135.

Selon un mode de réalisation visible sur les figures 26 et 27, la deuxième partie 114 comprend un deuxième tube coudé 136 à 90° ainsi qu'un raccord 138 assurant une liaison entre le deuxième tube coudé 136 et la paroi arrière 14 pour faire communiquer l'intérieur du deuxième tube coudé 136 avec le réseau de fluide 16, 16' prévu entre les parois avant et arrière 12, 14 de l'échangeur thermique.

Selon un mode de réalisation, le raccord 138 est identique à celui décrit sur les figures 28 à 30.

Le deuxième tube coudé 136 comprend des première et deuxième extrémités 136.1, 1136.2, la première extrémité 136.1 étant reliée au raccord 138 de la même manière que le premier tube coudé 118 avec le raccord 120.

Le deuxième tube coudé 136 présente un deuxième tronçon 140, formant une deuxième embout dit femelle sensiblement rectiligne qui s'étend à partir de la deuxième extrémité 136.2 et qui est suffisamment long et large pour recevoir le premier tronçon 130 du premier tube coudé 118.

Selon une configuration, un clip 142 en forme de U permet de relier le deuxième tronçon 140 à l'échangeur thermique 10.

La deuxième partie 114 comprend un manchon 144 assurant un guidage et une étanchéité entre les premier et deuxième tubes coudés 118 et 136. Ce manchon 144 est configuré pour compenser un mauvais alignement entre les premier et deuxième tronçons 130, 140 des premier et deuxième tubes coudés 118, 136. Ce manchon 144 est réalisé en un matériau déformable, semi-rigide pour pouvoir se déformer et compenser un éventuel désalignement.

Ce manchon 144 comprend une première partie 146 tubulaire emmanchée sur le deuxième tronçon 140 ainsi qu'une deuxième partie 148 évasée, formant une portée conique en saillie par rapport à la deuxième extrémité 136.2 du deuxième tube coudé 136. Cette forme évasée assure le centrage du premier tronçon 130 du premier tube coudé 118 dans le deuxième tronçon 140 du deuxième tube coudé 136.

Ce manchon 144 comprend une collerette intérieure 150 séparant les première et deuxième parties 146, 148 du manchon 144, configurée pour prendre appui contre la deuxième extrémité 136.2 du deuxième tube coudé 136, ayant une section de passage inférieure à celle du premier embout 130. Cette collerette intérieure 150 est relativement fine pour pouvoir se déformer et assurer une étanchéité entre les premier et deuxième tubes coudés 118, 136 malgré un éventuel désalignement.

## Revendications

1. Echangeur thermique (10) à parois minces présentant une paroi avant (12), une paroi arrière (14) délimitant entre elles une cavité de fluide (16) de faible épaisseur pour un fluide caloporteur ainsi qu'au moins des premier et deuxième embouts (74, 76) de systèmes de connexion fluidique (18, 20) espacés selon une direction de diffusion, **caractérisé en ce que** l'échangeur thermique (10) comprend un système de fixation configuré pour permettre de relier l'échangeur thermique (10) à un support (22) grâce à un mouvement de fixation orienté selon une direction de fixation et **en ce qu'**au moins un des systèmes de connexion fluidique (18, 20) comprend un premier embout (74, 130) mâle et un deuxième embout (76, 140) femelle et qui est configuré de sorte que le premier embout (74, 130) mâle pénètre dans le deuxième embout (76, 140) femelle lors d'un mouvement de connexion (78) parallèle au mouvement de fixation.

2. Echangeur thermique (10) à parois minces selon la revendication 1, **caractérisé en ce que** chaque deuxième embout (76, 140) femelle comprend un conduit (84, 136) débouchant au niveau d'une première ouverture (86.1, 136.2), via laquelle pénètre l'embout mâle (74, 130), ainsi qu'une portée conique (88, 148) au niveau de la première ouverture (86.1, 136.2) permettant de centrer le premier embout (74, 130).

3. Echangeur thermique (10) à parois minces selon la revendication 1 ou 2, **caractérisé en ce que** le premier embout (74) mâle comprend une tête (96), reliée à au moins une paroi, présentant une première face (96.1) et une deuxième face (96.2), un tube (98), configuré pour pénétrer dans un deuxième embout (76) femelle, présentant une première extrémité (98.1) libre et une deuxième extrémité (98.2) reliée à la deuxième face (96.2) de la tête (96) par une liaison (100) ainsi qu'un conduit (102) qui s'étend entre la première face (96.1) de la tête (96) et la première extrémité (98.1) du tube (98).

4. Echangeur thermique (10) à parois minces selon la revendication précédente, **caractérisé en ce que** la liaison (100) reliant le tube (98) et la tête (96) est une liaison rotule qui permet au tube (98) de s'incliner par rapport à la tête (96) selon toutes les directions.

5. Echangeur thermique (10) à parois minces selon la revendication précédente, **caractérisé en ce que** le tube (98) est rigide et la tête (96) est en un matériau déformable comme en élastomère.

6. Echangeur thermique (10) à parois minces selon l'une des revendications 3 à 5, **caractérisé en ce que** chaque premier embout (74) mâle comprend une gorge périphérique (104) au niveau de la tête (96) et **en ce que** la paroi de l'échangeur thermique (10) supportant le premier embout (74) mâle présente un trou de passage (106), la gorge périphérique (104) et le trou de passage (106) ayant sensiblement le même diamètre, la gorge périphérique (104) ayant une largeur sensiblement égale à l'épaisseur de la paroi.

7. Echangeur thermique (10) à parois minces selon l'une des revendications 1 à 2, **caractérisé en ce que** le premier embout (74) comprend un embout (76) femelle et un tube (110) souple.

8. Echangeur thermique (10) à parois minces selon l'une des revendications précédentes, **caractérisé en ce que** l'échangeur thermique comprend un cordon périphérique (44) reliant les parois avant et arrière (12, 14) qui s'étend sur toute la périphérie desdites parois avant et arrière (12, 14) et qui délimite la cavité de fluide (16) ainsi qu'une pluralité de zones de jonction (46) reliant les parois avant et arrière (12, 14), un ratio entre la superficie des zones de jonction (46) et la superficie totale délimitée par le cordon périphérique (44) étant compris entre 25 et 50%.

9. Echangeur thermique (10) à parois minces selon la revendication précédente, **caractérisé en ce que** le cordon périphérique (44) et les zones de jonction (46) ont chacun une largeur (L44, L46) comprise entre 10 et 25 mm et sont espacés d'une distance (L46') comprise entre 20 et 40 mm.

10. Echangeur thermique (10) à parois minces selon l'une des revendications précédentes, **caractérisé en ce que** l'échangeur thermique (10) comprend au moins une cavité de distribution (52) qui communique avec la cavité de fluide (16) et au moins un système de connexion fluidique (18, 20) et qui s'étend selon une direction perpendiculaire à la direction de diffusion du fluide caloporteur dans la cavité de fluide (16).

11. Echangeur thermique (10) à parois minces selon la revendication précédente, **caractérisé en ce que** la cavité de distribution (52) est délimitée par un boîtier de connexion (56) plaqué contre la face extérieure (14.2) de la paroi arrière (14) et relié à cette dernière de manière étanche, la paroi arrière (14) comportant, pour chaque cavité de distribution (52), au moins un orifice traversant (54) faisant communiquer ladite cavité de distribution (52) et la cavité de fluide (16).

12. Echangeur thermique (10) à parois minces selon la revendication 10, **caractérisé en ce que** la cavité de distribution (52) est produite par le pliage de la paroi avant (12) et/ou de la paroi arrière (14) et/ou d'une cornière complémentaire.

13. Echangeur thermique (10) à parois minces selon la revendication 1 ou 2, **caractérisé en ce que** le deuxième embout (140) comprend manchon (144) comportant une première partie (146) tubulaire emmanchée sur le deuxième embout (140) ainsi qu'une deuxième partie (148) évasée, formant la portée conique, en saillie par rapport à la deuxième extrémité (136.2) du deuxième embout (140).

14. Echangeur thermique (10) à parois minces selon la revendication précédente, **caractérisé en ce que** le manchon (144) comprend une collerette intérieure (150) séparant les première et deuxième parties (146, 148) du manchon (144) ayant une section de passage inférieure à celle du premier embout (130).

15. Parement d'un mur comprenant plusieurs échangeurs thermiques selon l'une des revendications précédentes.
